# EUROPEAN PATENT APPLICATION

(11) **EP 4 821 632 A1**
(43) Date of publication of application: **14.10.2026**
(21) Application number: 24920269.8
(22) Date of filing: 11.10.2024
(51) Int. Cl.: B23K 35/30, B23K 9/02, B23K 9/173, C22C 38/00, C22C 38/60

(54) **HORIZONTAL NARROW GAP GAS SHIELDED ARC WELDING METHOD**

(30) Priority: 25.01.2024 JP 2024009271
(71) Applicant: JFE Steel Corporation, Tokyo 100-0011 (JP)
(72) Inventor: TAKADA, Atsushi, Tokyo 100-0011 (JP); TAKANO, Takeshi, Tokyo 100-0011 (JP); UCHIDA, Kenji, Tokyo 100-0011 (JP); OKABE, Takatoshi, Tokyo 100-0011 (JP)
(74) Representative: Grünecker Patent- und Rechtsanwälte PartG mbB
(86) International application number: PCT/JP2024/036455
(87) International publication number: WO 2025/158721

(57) **Abstract**

Provided is a welding method capable of, when performing horizontal narrow-gap welding on steel materials, performing a defect-free welding process without requiring a special apparatus, even when the groove angle is 15° or less. Specifically, provided is a horizontal narrow-gap gas-shielded arc welding method for performing multi-layer welding on steel materials, in which a filler wire has a composition including, in mass%, C: 0.02 to 0.15%, Si: 0.60 to 0.95%, Mn: 1.80 to 2.10%, P: 0.030% or less, S: 0.030% or less, B: 0.0003 to 0.0050%, REM: 0.020 to 0.060%, O: 0.010% or less, and N: 0.010% or less, with the balance being Fe and unavoidable impurities, characterized in that SLI, determined from Expression (1), is 10 to 46. SLI = [Si] × [Mn] × [B] × 10000/α ...(1), where [element] represents the content (mass%) of the element in the filler wire, and α represents the volume fraction of a CO₂ gas in a shielding gas (0 < α ≤ 1).

## Description

### Technical Field

The present invention relates to a horizontal narrow-gap gas-shielded arc welding method. In particular, the present invention relates to a horizontal narrow-gap gas-shielded arc welding method for joining steel materials in the horizontal position with a narrow gap, or groove, between them, using multi-layer welding. In this specification, the numerical range "x to y" represents x or more and y or less, including the boundary values.

### Background Art

In recent years, with an increase in the size of steel structures, such as buildings and ships, there has been a tendency toward increasing the thickness of steel plates used. However, thicker steel plates require a larger groove area, requiring more weld passes and thus demanding more labor and time for performing a welding process. Furthermore, a declining workforce has made it increasingly difficult to secure skilled welding engineers. For such reasons, improving welding efficiency in the manufacture of steel structures is desirable.

One method of improving welding efficiency is to narrow the groove between steel plates. By narrowing the groove to reduce the groove area, it is possible to reduce the number of weld passes and thus shorten the welding time. However, when narrow-gap welding is performed on steel plates in the horizontal position, it is difficult to prevent welding defects, such as incomplete fusion, hot cracking, and slag inclusion. In response, various studies have been conducted.

For example, Patent Literature 1 discloses performing welding along a square groove, a single bevel groove, or a single V groove, using a narrow-gap welding method with two or more passes per layer that includes arranging a welding torch at an angle to each of the lower groove surface and the upper groove surface.

Patent Literature 2 discloses performing horizontal welding along a narrow groove (i.e., weld line) with two electrodes, using a horizontal narrow-gap welding method that includes directing the preceding wire toward the lower corner portion of the groove, directing the following wire toward the upper corner portion of the groove, and performing welding while generating arcs from the two wires.

Patent Literature 3 discloses, in a horizontal square-groove weld joint, a horizontal narrow-gap arc welding method that includes continuously performing welding with a specific weaving angle, width, and cycle, where the apex of weaving, as viewed from the front side of the weld joint, retracts relative to a weld line and tilts relative to the vertical line in a direction opposite to the welding travel direction.

Furthermore, Patent Literature 4 discloses a horizontal carbon dioxide gas-shielded arc welding method for performing horizontal narrow-gap multi-layer welding with straight polarity on steel plates each having a thickness of 16 to 25 mm, using a solid wire containing 0.025 to 0.050 mass% of rare earth element.

### Citation List

### Patent Literature

Patent Literature 1: Japanese Patent Publication No. S53-41105
Patent Literature 2: Japanese Patent Laid-Open No. S55-19460
Patent Literature 3: Japanese Patent Publication No. S58-49352
Patent Literature 4: Japanese Patent No. 5051966

### Summary of Invention

### Technical Problem

However, in the method described in Patent Literature 1, hot cracking occurs in the upper bead. In addition, each of the methods described in Patent Literatures 2 and 3 requires a special apparatus, and cannot be performed with a general-purpose welding apparatus. Furthermore, when the method described in Patent Literature 4 is applied with the groove angle set to 15° or less, welding defects, such as slag inclusion and incomplete fusion, are likely to occur. Thus, a joint free from welding defects cannot be easily manufactured, which is problematic.

An object of the present invention is to solve the foregoing problems, and provide a welding method capable of, when performing horizontal narrow-gap welding on steel materials, performing a defect-free welding process without requiring a special apparatus, even when the groove angle is 15° or less.

### Solution to Problem

The inventors have studied a welding method capable of, when performing horizontal narrow-gap welding on steel materials having a groove angle of 15° or less, a root gap in the range of 7 to 15 mm, and a thickness in the range of 10 to 100 mm, performing a defect-free welding process only by using various filler wires and using simple welding operations. The simple welding operations herein include an operation of linearly moving a welding torch along the weld line direction, and a weaving operation performed in combination with the operation of linearly moving the welding torch, the weaving operation including reciprocating the welding torch in a direction perpendicular to the weld line direction, that is, a direction perpendicular to the horizontal plane. As a result of intensive studies of such welding operations, the inventors have found that it is possible to generate a highly directional arc by using a filler wire containing a rare earth element and setting the polarity during welding to straight polarity. Furthermore, it has been found that adjusting the content of Si, Mn, and B in the filler wire and the proportion of a CO₂ gas in the shielding gas can control the amount and the melting point of the slag to be formed, thereby preventing welding defects, such as incomplete fusion and slag inclusion.

The present invention has been completed based on the foregoing findings and further studies. The summary of the present invention is as follows.
[1] A horizontal narrow-gap gas-shielded arc welding method for joining steel materials having a groove angle θ of 15° or less, a root gap G in a range of 7 to 15 mm, and a thickness t in a range of 10 to 100 mm, using multi-layer gas-shielded arc welding, including using a filler wire having a chemical composition including, in mass%, C: 0.02 to 0.15%, Si: 0.60 to 0.95%, Mn: 1.80 to 2.10%, P: 0.030% or less, S: 0.030% or less, B: 0.0003 to 0.0050%, a rare earth element (REM): 0.020 to 0.060%, O (oxygen): 0.010% or less, and N: 0.010% or less, with a balance being Fe and unavoidable impurities, characterized in that:
   SLI, determined from Expression (1) below, is in a range of 10 to 46: $SLI = \left[Si\right] \times \left[Mn\right] \times \left[B\right] \times 10000 / α$ (1),
   where [element] represents a content (mass%) of the element in the filler wire, and α represents a volume fraction of a CO₂ gas in a shielding gas (0 < α ≤ 1).
[2] In the horizontal narrow-gap gas-shielded arc welding method in [1] above, the chemical composition of the filler wire further includes, in mass%, at least one component selected from the group consisting of Cu: 0.60% or less, Ni: 1.50% or less, Cr: 0.80% or less, Mo: 0.80% or less, Nb: 0.04% or less, V: 0.04% or less, Ti: 0.30% or less, Al: 0.10% or less, Sn: 0.30% or less, and Pb: 0.30% or less.
[3] The horizontal narrow-gap gas-shielded arc welding method in [1] or [2] above further includes performing welding with straight polarity by using the filler wire as a negative electrode.
[4] In the horizontal narrow-gap gas-shielded arc welding method in any one of [1] to [3] above, a welding current I is in a range of 240 to 360 A, a welding voltage E is in a range of 26 to 42 V, and a welding speed S is in a range of 20 to 80 cm/min.

### Advantageous Effects of Invention

According to the present invention, it is possible to provide a sound weld joint free from welding defects by performing horizontal narrow-gap gas-shielded arc welding on steel materials, without requiring a special apparatus, even when the groove angle is 15° or less. Thus, the present invention provides significant industrial advantages.

### Brief Description of Drawings

[Fig. 1] is a schematic cross-sectional view illustrating an exemplary shape of a horizontal narrow groove.
[Fig. 2] is a schematic cross-sectional view illustrating an example of weld metal deposited in layers within the horizontal narrow groove.

### Description of Embodiments

An embodiment related to the features of the present invention will be specifically described below.

A horizontal narrow-gap gas-shielded arc welding method according to an embodiment of the present invention is directed to gas-shielded arc welding performed on steel materials having a groove angle θ of 15° or less, a root gap G in the range of 7 to 15 mm, and a thickness t in the range of 10 to 100 mm.

### [Steel Materials]

First, steel materials applied in this embodiment will be described. The steel materials are thick steel plates used for steel structures such as buildings and ships. Examples of steel grade include a 490 MPa-grade steel material, a 550 MPa-grade steel material, a 590 MPa-grade steel material, and a 780 MPa-grade steel material. In addition, the thickness t of each steel material in this embodiment falls within the range of 10 to 100 mm. When the thickness t is less than 10 mm, there is no advantage in reducing the groove area when performing narrow-gap welding. Meanwhile, the upper limit of the thickness t of each steel material used in the foregoing applications is typically 100 mm. Therefore, the thickness t of each steel material is limited to the range of 10 to 100 mm. Preferably, the thickness t of each steel material is in the range of 15 to 90 mm.

Next, an example of the chemical composition of each steel material will be described below.

Preferably, the steel material has a chemical composition including, in mass%, C: 0.04 to 0.15%, Si: 0.05 to 1.00%, Mn: 0.50 to 2.50%, P: 0.030% or less, S: 0.020% or less, Al: 0.050% or less, O (oxygen): 0.010% or less, and N: 0.010% or less, with the balance being Fe and unavoidable impurities.

Furthermore, it is preferable that the steel material optionally contain at least one component selected from the group consisting of Cu: 1.00% or less, Ni: 2.00% or less, Cr: 1.00% or less, Mo: 1.00% or less, Nb: 0.20% or less, V: 0.20% or less, Ti: 0.050% or less, Sn: 0.05% or less, Pb: 0.050% or less, REM: 0.050% or less, and B: 0.0030% or less. The optional components are determined based on the intended use of the steel material, considering strength and toughness, for example.

### [Groove angle θ]

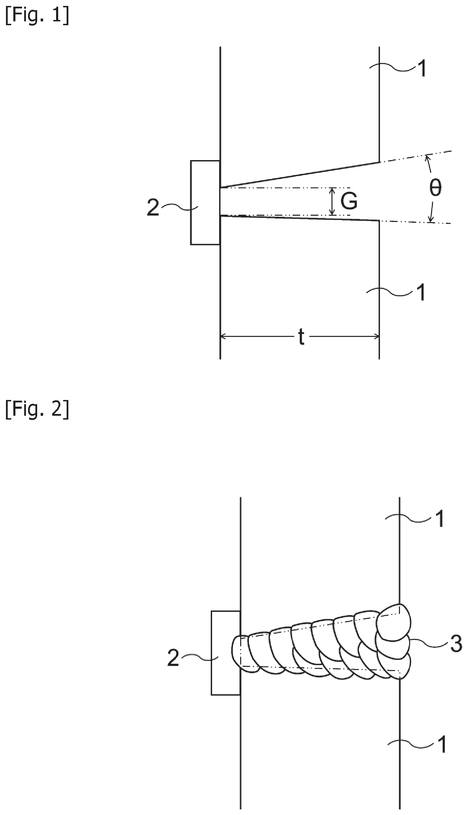

This embodiment is directed to, as illustrated in Fig. 1, a narrow groove with a groove angle θ, which is the angle of a groove portion between steel materials 1 and 1 in the horizontal position that are arranged to face each other in the vertical direction, of 15° or less. When θ exceeds 15°, the efficiency advantage of narrow-gap welding is diminished. Therefore, θ is limited to 15° or less. Note that θ = 0° corresponds to a case where the groove walls of the upper and lower steel materials 1 and 1 are parallel; such a case is also covered by this embodiment. The preferable angle θ is in the range of 0 to 10°.

### [Root gap G]

As illustrated in Fig. 1, the narrowest gap of the groove portion between the steel materials 1 and 1 in the horizontal position, which are arranged to face each other in the vertical direction, is referred to as a root gap, and represented by G (mm). The root gap G in this embodiment is set in the range of 7 to 15 mm. When G is less than 7 mm, it becomes difficult to insert a welding torch into the groove. Meanwhile, when G exceeds 15 mm, the efficiency advantage of narrow-gap welding is diminished. Therefore, the root gap G is limited to the range of 7 to 15 mm. Preferably, the root gap G is set in the range of 8 to 13 mm.

### [Gas-shielded arc welding method]

Next, the gas-shielded arc welding method according to the present invention will be described.

The gas-shielded arc welding method is a major arc welding method that uses a gas (i.e., shielding gas) for protecting an arc and molten metal from oxygen and nitrogen in the atmosphere.

### [Shielding gas]

As the shielding gas, the most cost-effective carbon dioxide gas (CO₂ gas), an inert gas such as Ar or He, or a mixed gas of CO₂ gas and an inert gas is used, for example. The welding method in this embodiment is performed with a shielding gas composed primarily of CO₂ gas. Note that the composition of the shielding gas should be determined in consideration of the SLI value described later.

### [Other welding conditions]

Next, other welding conditions will be described.

### <Welding current I>

In this embodiment, the welding current I is preferably set in the range of 240 to 360 A. When the welding current I is lower than 240 A, the arc pressure becomes low, potentially causing slag inclusion or incomplete fusion due to the residual unmelted slag. Meanwhile, when the welding current I is higher than 360 A, there is a risk of sagging caused by convection within the weld metal, that is, overlap. Therefore, the welding current I is preferably set in the range of 240 to 360 A. More preferably, the welding current I is set in the range of 260 to 340 A, and further preferably, the welding current I is set in the range of 270 to 320 A.

### <Welding voltage E>

In this embodiment, the welding voltage E is preferably set in the range of 26 to 42 V. When the welding voltage E is lower than 26 V, it may be impossible to maintain a stable arc, potentially resulting in unstable welding. Meanwhile, when the welding voltage E is higher than 42 V, the arc spreads and the heat of the arc is dispersed, hindering slag melting and thus increasing the likelihood of slag inclusion. Therefore, the welding voltage E is preferably set in the range of 26 to 42 V. More preferably, the welding voltage E is set in the range of 28 to 40 V, and further preferably, the welding voltage E is set in the range of 30 to 38 V.

### <Welding speed S: 20 cm/min to 80 cm/min>

In this embodiment, the welding speed S is preferably set in the range of 20 to 80 cm/min. When the welding speed S is less than 20 cm/min, excessive weld metal is produced even with an appropriate current and an appropriate voltage supplied, potentially causing sagging of the weld metal. Meanwhile, when the welding speed S is greater than 80 cm/min, sufficient heat input is not provided, hindering slag melting and thus potentially causing slag inclusion. Therefore, the welding speed S is preferably set in the range of 20 to 80 cm/min. More preferably, the welding speed S is set in the range of 25 to 75 cm/min, and further preferably, the welding speed S is set in the range of 28 to 72 cm/min.

### [Multi-layer welding]

As illustrated in Fig. 2, the narrow-gap gas-shielded arc welding method according to this embodiment is applied to narrow-gap multi-layer welding performed by using a backing metal 2 at the bottom portion (i.e., narrow side) of the horizontal narrow groove. When the narrow-gap gas-shielded arc welding method according to this embodiment is performed, the welding conditions for each pass, from the first layer to the final layer, are appropriately set in the foregoing ranges of the welding conditions. The number of layers of the resulting multi-layer weld metal 3 differs depending on the thickness t of each steel material 1, the groove angle θ, and the root gap G and the like, but is preferably in the range of about 2 to 20 when the thickness t is in the range of 10 to 100 mm as described above. In addition, the number of passes is preferably set in the range of 3 to 50 as multiple passes may be performed per layer.

### [Polarity during welding]

As the polarity during welding, either straight polarity or reverse polarity may be selected. When straight polarity is selected, the potential of the steel materials is set high, and the potential of the filler wire is set low. Meanwhile, when reverse polarity is selected, the potential of the steel materials is set low and the potential of the filler wire is set high. However, for the narrow groove of this embodiment, where the groove angle θ is small and the root gap G is also small, straight polarity is preferable as it improves welding efficiency. In a narrow groove, the arc tends to be directed toward a groove wall, making it difficult to melt the bottom portion (i.e., narrow side) of the groove. Therefore, performing welding with straight polarity using a wire that contains REM described later, can improve arc directionality. This allows the arc to concentrate more easily on the bottom portion of the groove, thereby enabling stable and sufficient melting of the bottom portion of the groove.

### [Filler wire]

Next, the filler wire used for the horizontal narrow-gap gas-shielded arc welding method of this embodiment will be described.

Wires of various standards may be used as the filler wire of this embodiment. Examples include YGW 11, YGW 18, G59JA1UC3M1T, G69A2UCN2M4T, and G78A2UCN4M4T classified under JIS Z 3312:2009. The wire diameter ϕ is preferably set in the range of 1.0 to 2.0 mm.

Next, the filler wire has a chemical composition including, in mass%, C: 0.02 to 0.15%, Si: 0.60 to 0.95%, Mn: 1.80 to 2.10%, P: 0.030% or less, S: 0.030% or less, and B: 0.0003 to 0.0050%. The filler wire also contains a rare earth element (REM): 0.020 to 0.060%, O (oxygen): 0.010% or less, and N: 0.010% or less, with the balance being Fe and unavoidable impurities. Furthermore, Si, Mn, and B are contained to allow SLI, determined from Expression (1) below, to fall in the range of 10 to 46: $SLI = \left[Si\right] \times \left[Mn\right] \times \left[B\right] \times 10000 / α$ (1), where [element] represents the content (mass%) of the element, and α represents the volume fraction of a CO₂ gas in the shielding gas (0 < α ≤ 1). The details about SLI and α will be described later.

### [Chemical composition of filler wire]

The reasons for limiting the chemical composition of the filler wire are as follows. In the following description, "%" in the chemical composition means "mass%."

### [C: 0.02 to 0.15%]

C is an element that contributes to improving the strength of the weld metal. To ensure the strength of the weld metal, the C content needs to be set to 0.02% or more. Meanwhile, when the C content exceeds 0.15%, the weld metal hardens and has lower toughness. Therefore, the C content is limited to 0.15% or less. Preferably, the C content is set in the range of 0.03 to 0.14%, and more preferably, the C content is set in the range of 0.04 to 0.13%.

### [Si: 0.60 to 0.95%]

Si serves as a deoxidizing element and generates slag on the surface of the weld metal. This slag generation suppresses the sagging of the weld metal in the groove, thereby effectively preventing welding defects. To obtain such an effect, the Si content is required to be 0.60% or more. Meanwhile, when the Si content exceeds 0.95%, excessive slag is generated, causing slag inclusion. Therefore, the Si content is limited to 0.95% or less. Preferably, the Si content is set in the range of 0.62 to 0.92%, and more preferably, the Si content is set in the range of 0.66 to 0.90%.

### [Mn: 1.80 to 2.10%]

Mn serves as a deoxidizing element. Inclusion of Mn oxide (MnO) in the slag improves its fluidity, thereby enhancing fusion between the base metal and the weld metal. To obtain this effect, the Mn content needs to be set to 1.80% or more. Meanwhile, when the Mn content exceeds 2.10%, the fluidity of the slag becomes excessively high, making it difficult to suppress the sagging of the weld metal. Therefore, the Mn content is limited to the range of 1.80 to 2.10%. Preferably, the Mn content is set in the range of 1.85 to 2.05%, and more preferably, the Mn content is set in the range of 1.90 to 2.00%.

### [P: 0.030% or less]

P is an element that is unavoidably contained in the weld wire, reduces the toughness of the weld metal, and further induces hot cracking. Therefore, the P content is preferably minimized. The acceptable P content is 0.030% or less. Thus, the P content is limited to 0.030% or less. However, when the P content is excessively reduced, the refining cost increases. Accordingly, the P content is preferably adjusted to 0.002% or more. More preferably, the P content is set in the range of 0.003 to 0.025%.

### [S: 0.030% or less]

S is an element that is unavoidably contained in the weld wire and induces hot cracking. Therefore, the S content is preferably minimized. The acceptable S content is 0.030% or less. Thus, the S content is limited to 0.030% or less. However, when the S content is excessively reduced, the refining cost increases. Accordingly, the S content is preferably adjusted to 0.002% or more. More preferably, the S content is set in the range of 0.003 to 0.025%.

### [B: 0.0003 to 0.0050%]

B serves as a deoxidizing element in the weld metal. Inclusion of B oxide (B₂O₃) in the slag improves its fluidity and lowers its melting point, thereby suppressing slag inclusion. To obtain this effect, the B content is required to be set to 0.0003% or more. Meanwhile, when the B content exceeds 0.0050%, cracking occurs during the wire production step, impairing manufacturability. Accordingly, the B content is limited to the range of 0.0003 to 0.0050%. Preferably, the B content is set in the range of 0.0008 to 0.0040%, and more preferably, the B content is set in the range of 0.0012 to 0.0035%.

### [Rare earth element (REM): 0.020 to 0.060%]

A wire containing a rare earth element (REM) has the effect of improving arc directionality when the polarity during welding is set to straight polarity. Improvement of arc directionality can suppress arc deflection toward the groove wall, thereby effectively preventing melting of slag generated during the previous pass as well as incomplete fusion and thus preventing welding defects. Therefore, REM is an essential element in this embodiment. To obtain this effect, the REM content is required to be set to 0.020% or more. Meanwhile, when the REM content exceeds 0.060%, cracking occurs during the wire production step, impairing manufacturability. Accordingly, the REM content is limited to 0.060% or less. Preferably, the REM content is set in the range of 0.025 to 0.055%, and more preferably, the REM content is set in the range of 0.028 to 0.050%.

Herein, REM refers to the collective term for the 17 elements in Group 3 of the periodic table that belong to Periods 4 to 6, excluding actinides. In this embodiment, it is preferable to use the 15 lanthanide elements with atomic numbers 57 to 71, in particular, Ce and La. Ce or La may be added individually or in combination. Note that the REM content in this embodiment refers to the total content of these REM elements.

### [O (oxygen): 0.010% or less]

Oxygen (O) is an element that is unavoidably contained in the weld wire and reduces the workability of the wire. Therefore, the O content is preferably minimized. The acceptable O content is 0.010% or less. However, when the O content is excessively reduced, the refining cost increases. Accordingly, the O content is preferably adjusted to 0.001% or more. More preferably, the O content is set in the range of 0.002 to 0.008%.

### [N: 0.010% or less]

N is an element that is unavoidably contained in the weld wire and reduces the toughness of the weld metal. Therefore, the N content is preferably minimized. The acceptable N content is 0.010% or less. However, when the N content is excessively reduced, the refining cost increases. Accordingly, the N content is preferably adjusted to 0.001% or more. More preferably, the N content is set in the range of 0.002 to 0.008%.

### [Optional components]

The foregoing components form the basic chemical composition of the filler wire used in this embodiment. In this embodiment, in addition to the foregoing basic chemical composition, the filler wire may optionally contain as appropriate at least one component selected from the group consisting of Cu: 0.60% or less, Ni: 1.50% or less, Cr: 0.80% or less, Mo: 0.80% or less, Nb: 0.04% or less, V: 0.04% or less, Ti: 0.30% or less, Al: 0.10% or less, Sn: 0.30% or less, and Pb: 0.30% or less. The optional components are determined based on the intended use of the filler wire, considering strength, toughness, and corrosion resistance, for example. The optional components will be individually described hereinafter.

### [Cu: 0.60% or less]

Cu is an element that increases the strength of the weld metal. When the Cu content exceeds 0.60%, it causes hot brittleness in the temperature range of around 1100°C, inducing surface cracking of the bead. Therefore, the Cu content is preferably set to 0.60% or less. When Cu is added to increase the strength of the weld metal, the Cu content is more preferably set to 0.05% or more. Further preferably, the Cu content is set in the range of 0.08 to 0.50%.

### [Ni: 1.50% or less]

Ni is an element that increases the strength of the weld metal without reducing its toughness. Ni is an expensive element, and when the Ni content exceeds 1.50%, the cost of the wire increases. Therefore, the Ni content is preferably set to 1.50% or less. When Ni is added to increase the strength of the weld metal, the Ni content is more preferably set to 0.01% or more. Further preferably, the Ni content is set in the range of 0.04 to 1.40%.

### [Cr: 0.80% or less]

Cr is an element that improves the strength and corrosion resistance of the weld metal. When the Cr content exceeds 0.80%, the wire hardens during drawing, impairing manufacturability. Therefore, the Cr content is preferably set to 0.80% or less. When Cr is added to increase the strength of the weld metal, the Cr content is more preferably set to 0.02% or more. Further preferably, the Cr content is set in the range of 0.05 to 0.75%.

### [Mo: 0.80% or less]

Mo is an element that improves the strength and corrosion resistance of the weld metal. When the Mo content exceeds 0.80%, the wire hardens during drawing, impairing manufacturability. Therefore, the Mo content is preferably set to 0.80% or less. When Mo is added to increase the strength of the weld metal, the Mo content is more preferably set to 0.02% or more. Further preferably, the Mo content is set in the range of 0.04 to 0.75%.

### [Nb: 0.04% or less]

Nb is an element that precipitates fine carbide particles, thereby increasing the strength of the weld metal. When the Nb content exceeds 0.04%, the wire hardens during drawing, impairing manufacturability. Therefore, the Nb content is preferably set to 0.04% or less. When Nb is added to increase the strength of the weld metal, the Nb content is more preferably set to 0.01% or more. Further preferably, the Nb content is set in the range of 0.01 to 0.03%.

### [V: 0.04% or less]

V is an element that precipitates fine carbide particles, thereby increasing the strength of the weld metal. When the V content exceeds 0.04%, the wire hardens during drawing, impairing manufacturability. Therefore, the V content is preferably set to 0.04% or less. When V is added to increase the strength of the weld metal, the V content is more preferably set to 0.01% or more. Further preferably, the V content is set in the range of 0.01 to 0.03%.

### [Ti: 0.30% or less]

Ti is an element that precipitates fine carbide particles, thereby increasing the strength of the weld metal. When the Ti content exceeds 0.30%, the wire hardens during drawing, impairing manufacturability. Therefore, the Ti content is preferably set to 0.30% or less. When Ti is added to increase the strength of the weld metal, the Ti content is more preferably set to 0.04% or more. Further preferably, the Ti content is set in the range of 0.05 to 0.28%.

### [Al: 0.10% or less]

Al has the effect of improving the yield of REM during the melting of the wire material. When the Al content exceeds 0.10%, it impairs the toughness of the weld metal. Therefore, the Al content is preferably set to 0.10% or less. When Al is added to improve the yield of REM, the Al content is more preferably set to 0.01% or more. Further preferably, the Al content is set in the range of 0.01 to 0.08%.

### [Sn: 0.30% or less]

Sn has the effect of improving the corrosion resistance of the weld metal. When the Sn content exceeds 0.30%, it induces hot cracking. Therefore, the Sn content is preferably set to 0.30% or less. When Sn is added to improve the corrosion resistance of the weld metal, the Sn content is more preferably set to 0.01% or more. Further preferably, the Sn content is set in the range of 0.02 to 0.25%.

### [Pb: 0.30% or less]

Pb has the effect of improving the machinability of the weld metal. When the Pb content exceeds 0.30%, it induces hot cracking. Therefore, the Pb content is preferably set to 0.30% or less. When Pb is added to improve the machinability of the weld metal, the Pb content is more preferably set to 0.01% or more. Further preferably, the Pb content is set in the range of 0.02 to 0.25%.

### [Composition of balance]

The balance of the component composition of the filler wire, other than the foregoing basic chemical composition and optional components, includes Fe and unavoidable impurities. Examples of the unavoidable impurities include H, Mg, Zn, Re, Co, Sb, and Bi. The acceptable total content of such unavoidable impurities is 0.01% or less. In addition, the filler wire may also contain other elements as long as the conditions of the foregoing basic chemical composition and optional components are satisfied, and such an embodiment is also included in the technical scope of the present invention.

### [Method for manufacturing filler wire]

Hereinafter, a method for manufacturing a filler wire will be described.

A steel material, such as a billet, manufactured by melting molten steel having the foregoing composition in a converter, an electric furnace, or the like, and then performing a continuous casting process thereon is subjected to hot rolling, cold rolling, and wire drawing, for example, to form a steel wire rod with a diameter in the range of 1.0 to 2.0 mm. Herein, the settings and conditions for hot rolling and cold rolling are not limited to particular ones since it is acceptable as long as a steel wire rod with predetermined dimensions and shape is manufactured. The steel wire rod obtained through rolling is sequentially subjected to the steps of annealing, pickling, Cu plating, and wire drawing to become a filler wire with a predetermined diameter.

### [SLI: 10 to 46]

Described next is a parameter [SLI] that is determined based on the relationship between the composition of components (Si, Mn, and B) in the foregoing filler wire that combine with oxygen in the wire to form slag and the proportion of a CO₂ gas in the shielding gas.

The CO₂ gas in the shielding gas serves as an active gas, and Si, Mn, and B, which are the deoxidizing elements, in the wire are oxidized to form slag. The main component of the slag is SiO₂-MnO. This derives from the oxidation products of Si and Mn that account for high proportions in the wire. When the wire contains B, the resulting slag contains B₂O₃, which lowers the melting point of the slag. When the melting point of the slag is too high, the slag cannot be melted with an arc, with the result that the unmelted slag remains between the weld beads. Therefore, a welding defect, that is, slag inclusion occurs. To prevent such a welding defect, it is important to control the slag generation amount by adjusting the content of Si, Mn, and B in the wire and also by adjusting the volume fraction α of the CO₂ gas in the shielding gas. In addition, it has been found that the foregoing object can be achieved by allowing SLI, which is represented by Expression (1) below, to be within an appropriate range: $SLI = \left[Si\right] \times \left[Mn\right] \times \left[B\right] \times 10000 / α$ (1), where [element] represents the content (mass%) of the element in the filler wire, and α represents the volume fraction of the CO₂ gas in the shielding gas (0 < α ≤ 1).

When α = 1, the CO₂ gas accounts for 100 vol% of the shielding gas. When α < 1, that is, when the CO₂ gas accounts for less than 100 vol% of the shielding gas, the remaining gas is an inert gas. Examples of such an inert gas include an Ar gas and an He gas. For example, when α = 0.8, the CO₂ gas accounts for 80 vol%, and an inert gas (e.g., Ar gas) accounts for the remaining 20 vol%. Note that the shielding gas may also contain other gases as unavoidable impurities within the range there is no influence on weldability.

When SLI is less than 10, the melting point of the slag becomes high, and slag inclusion thus occurs. Therefore, it is essential to adjust SLI to be 10 or greater. Meanwhile, when SLI exceeds 46, the melting point of the slag becomes too low, making it difficult to suppress the sagging of the weld metal. Therefore, SLI is limited to the range of 10 to 46. Preferably, SLI is set in the range of 12 to 44, and more preferably, SLI is set in the range of 15 to 40.

### Examples

Two steel plates 1, each having a composition shown in Table 1, a grade of 490 to 590 MPa, and a thickness of 10 to 100 mm, were prepared. Then, as shown in Fig. 2, a groove with an angle θ and a root gap G was formed between the steel plates 1, and gas-shielded arc welding was performed thereon by using a backing metal 2 at the bottom portion of the groove, thereby fabricating a weld joint. As the welding gas, a mixed gas of a CO₂ gas and an Ar gas as an inert gas was used.

**[Table 1]**

| Steel material No. | Strength grade N/mm² | Chemical composition [mass%] of steel material | | | | | | | | | | | | | | | | | | |
|---|---|---|---|---|---|---|---|---|---|---|---|---|---|---|---|---|---|---|---|---|
| | | C | Si | Mn | P | S | B | REM | O | N | Cu | Ni | Cr | Mo | Nb | V | Ti | Al | Sn | Pb |
| S1 | 490 | 0.09 | 0.20 | 1.50 | 0.004 | 0.002 | - | - | 0.002 | 0.004 | - | - | - | - | - | - | - | 0.03 | - | - |
| S2 | 550 | 0.11 | 0.32 | 1.58 | 0.004 | 0.003 | - | - | 0.003 | 0.003 | - | - | - | - | 0.01 | - | 0.01 | 0.02 | - | 0.01 |
| S3 | 590 | 0.08 | 0.15 | 1.86 | 0.003 | 0.003 | 0.0010 | - | 0.001 | 0.005 | 0.1 | 0.2 | 0.1 | 0.2 | 0.02 | 0.01 | 0.02 | 0.03 | 0.02 | - |

| | | | | | | | | | | | | | | | | | | | | |
|---|---|---|---|---|---|---|---|---|---|---|---|---|---|---|---|---|---|---|---|---|
| (Note): "-" indicates "not added." | | | | | | | | | | | | | | | | | | | | |

As the filler wire, a steel ingot with a composition shown in Table 2 was melted and drawn into a wire with a diameter of 1.2 mm.

**[Table 2]**

| Steel ingot No. for filler wire | Chemical composition [mass%] of steel ingot for filler wire | | | | | | | | | | | | | | | | | | |
|---|---|---|---|---|---|---|---|---|---|---|---|---|---|---|---|---|---|---|---|
| | C | Si | Mn | P | S | B | REM | O | N | Cu | Ni | Cr | Mo | Nb | V | Ti | Al | Sn | Pb |
| A | 0.03 | 0.62 | 1.82 | 0.005 | 0.002 | 0.0040 | 0.025 | 0.002 | 0.004 | - | - | - | - | - | - | 0.18 | 0.03 | - | - |
| B | 0.05 | 0.72 | 1.92 | 0.004 | 0.003 | 0.0028 | 0.031 | 0.003 | 0.003 | 0.25 | 0.01 | - | - | 0.01 | 0.01 | - | 0.02 | - | - |
| C | 0.07 | 0.92 | 2.08 | 0.006 | 0.008 | 0.0015 | 0.057 | 0.001 | 0.005 | - | 0.35 | 0.03 | 0.74 | - | - | 0.15 | 0.01 | 0.02 | - |
| D | 0.11 | 0.61 | 1.95 | 0.011 | 0.011 | 0.0018 | 0.021 | 0.002 | 0.002 | - | - | - | - | - | - | - | - | - | - |
| E | 0.10 | 0.82 | 2.04 | 0.007 | 0.005 | 0.0018 | 0.040 | 0.002 | 0.005 | 0.05 | - | 0.20 | 0.15 | 0.03 | - | 0.27 | - | - | 0.03 |
| F | 0.02 | 0.85 | 1.94 | 0.005 | 0.006 | 0.0021 | 0.048 | 0.001 | 0.002 | - | - | - | - | - | - | - | 0.08 | - | 0.27 |
| G | 0.08 | 0.92 | 1.84 | 0.003 | 0.004 | 0.0008 | 0.051 | 0.004 | 0.009 | - | - | - | - | - | - | - | - | - | - |
| H | 0.04 | 0.67 | 2.10 | 0.015 | 0.012 | 0.0024 | 0.022 | 0.009 | 0.004 | - | 1.42 | - | - | - | - | - | - | - | - |
| I | 0.05 | 0.65 | 1.81 | 0.002 | 0.024 | 0.0005 | 0.031 | 0.003 | 0.005 | 0.58 | - | - | - | - | - | 0.18 | 0.04 | - | - |
| J | 0.06 | 0.84 | 1.89 | 0.018 | 0.008 | 0.0004 | 0.029 | 0.002 | 0.008 | - | - | - | - | - | 0.03 | - | - | 0.26 | - |
| K | 0.14 | 0.81 | 1.92 | 0.005 | 0.006 | 0.0024 | 0.038 | 0.001 | 0.006 | - | - | 0.76 | 0.03 | - | - | - | - | - | - |
| L | 0.02 | 0.95 | 1.96 | 0.025 | 0.004 | 0.0024 | 0.010 | 0.005 | 0.004 | - | - | - | - | - | - | - | 0.02 | - | - |
| M | 0.05 | 0.91 | 1.71 | 0.006 | 0.008 | 0.0021 | 0.046 | 0.004 | 0.002 | - | - | - | - | - | - | - | - | - | - |
| N | 0.07 | 0.51 | 1.84 | 0.007 | 0.009 | 0.0018 | 0.035 | 0.008 | 0.006 | - | - | - | - | - | - | - | - | - | - |

| | | | | | | | | | | | | | | | | | | | |
|---|---|---|---|---|---|---|---|---|---|---|---|---|---|---|---|---|---|---|---|
| (Note): "-" indicates "not added." | | | | | | | | | | | | | | | | | | | |

Table 3 summarizes the steel material, the groove shape, the welding conditions, and the filler wire used in each welding test. Note that the welding speed was adjusted in each pass.

**[Table 3]**

| Test No. | Steel material No. | Thickness t | Groove angle θ | Root gap G | CO₂ gas | Volume fraction α of CO₂ gas | Steel ingot No. for filler wire | Polarity | SLI | Welding current I | Welding voltage E | Welding speed S | Welding defect | | Remarks |
|---|---|---|---|---|---|---|---|---|---|---|---|---|---|---|---|
| | | mm | ° | mm | Vol% | - | | | - | A | V | cm/min | Present/Absent | Type | |
| 1 | S1 | 25 | 0 | 9 | 100 | 1.0 | A | Straight polarity | 45 | 320 | 33 | 30~80 | Absent | | Invention Example |
| 2 | S1 | 50 | 5 | 10 | 100 | 1.0 | B | Straight polarity | 39 | 310 | 34 | 30~80 | Absent | | Invention Example |
| 3 | S1 | 60 | 10 | 8 | 90 | 0.9 | C | Straight polarity | 32 | 300 | 32 | 30~80 | Absent | | Invention Example |
| 4 | S1 | 40 | 0 | 15 | 50 | 0.5 | D | Straight polarity | 43 | 280 | 30 | 20~80 | Absent | | Invention Example |
| 5 | S1 | 32 | 5 | 7 | 100 | 1.0 | E | Straight polarity | 30 | 240 | 26 | 20~70 | Absent | | Invention Example |
| 6 | S2 | 40 | 10 | 12 | 80 | 0.8 | F | Straight polarity | 43 | 360 | 42 | 40~80 | Absent | | Invention Example |
| 7 | S2 | 40 | 0 | 10 | 100 | 1.0 | G | Straight polarity | 14 | 320 | 40 | 30~80 | Absent | | Invention Example |
| 8 | S3 | 18 | 0 | 10 | 100 | 1.0 | H | Straight polarity | 34 | 260 | 30 | 20~70 | Absent | | Invention Example |
| 9 | S3 | 80 | 15 | 10 | 50 | 0.5 | I | Straight polarity | 12 | 310 | 34 | 30~80 | Absent | | Invention Example |
| 10 | S1 | 50 | 5 | 8 | 100 | 1.0 | J | Straight polarity | 6 | 340 | 36 | 40~80 | Present | Slag inclusion | Comparative Example |
| 11 | S1 | 45 | 0 | 10 | 40 | 0.4 | K | Straight polarity | 93 | 300 | 32 | 30~80 | Present | Incomplete fusion | Comparative Example |
| 12 | S1 | 55 | 0 | 10 | 100 | 1.0 | L | Straight polarity | 45 | 320 | 38 | 30~80 | Present | Slag inclusion | Comparative Example |
| 1 3 | S1 | 55 | 0 | 12 | 100 | 1.0 | M | Straight polarity | 33 | 280 | 30 | 30~80 | Present | Incomplete fusion | Comparative Example |
| 14 | S1 | 55 | 5 | 10 | 100 | 1.0 | N | Straight polarity | 17 | 270 | 29 | 30~80 | Present | Incomplete fusion | Comparative Example |
| 15 | S1 | 50 | 5 | 14 | 60 | 0.6 | J | Straight polarity | 11 | 340 | 36 | 40~80 | Absent | | Invention Example |
| 16 | S1 | 45 | 0 | 10 | 100 | 1.0 | K | Straight polarity | 37 | 300 | 32 | 30~80 | Absent | | Invention Example |
| 17 | S1 | 10 | 0 | 10 | 100 | 1.0 | A | Reverse polarity | 45 | 280 | 32 | 30~80 | Absent | | Invention Example |
| 18 | S1 | 100 | 5 | 10 | 100 | 1.0 | A | Straight polarity | 45 | 310 | 33 | 30~80 | Absent | | Invention Example |
| 19 | S1 | 22 | 10 | 8 | 90 | 0.9 | C | Reverse polarity | 32 | 280 | 32 | 30~80 | Absent | | Invention Example |

| | | | | | | | | | | | | | | | |
|---|---|---|---|---|---|---|---|---|---|---|---|---|---|---|---|
| (Note): SLI = [Si] × [Mn] × [B] × 10000/α, where each of Si, Mn, and B represents its content (mass%) in the filler wire, and α represents the volume fraction of the CO₂ gas (1 or less). | | | | | | | | | | | | | | | |

A macro cross-section was taken from the obtained weld joint to evaluate the presence or absence of welding defects. Those free from welding defects are indicated by "None," while those having defects, such as slag inclusion, undercut, overlap, incomplete fusion, and hot cracking, are indicated by "Present."

None of the examples of the invention were found to have welding defects. Meanwhile, comparative examples outside the scope of the present invention were found to have welding defects.

### Reference Signs List

- 1: steel material
- 2: backing metal
- 3: weld metal (i.e., multi-layer)
- θ: groove angle
- G: root gap
- t: thickness of steel material

## Claims

1. A horizontal narrow-gap gas-shielded arc welding method for joining steel materials having a groove angle θ of 15° or less, a root gap G in a range of 7 to 15 mm, and a thickness t in a range of 10 to 100 mm, using multi-layer gas-shielded arc welding, comprising:
using a filler wire having a chemical composition including, in mass%:
C: 0.02 to 0.15%,
Si: 0.60 to 0.95%,
Mn: 1.80 to 2.10%,
P: 0.030% or less,
S: 0.030% or less,
B: 0.0003 to 0.0050%,
a rare earth element (REM): 0.020 to 0.060%,
O (oxygen): 0.010% or less, and
N: 0.010% or less,
with a balance being Fe and unavoidable impurities,
**characterized in that**:
SLI, determined from Expression (1) below, is in a range of 10 to 46: $SLI = \left[Si\right] \times \left[Mn\right] \times \left[B\right] \times 10000 / α$ (1),
where [element] represents a content (mass%) of the element in the filler wire, and α represents a volume fraction of a CO₂ gas in a shielding gas (0 < α ≤ 1).

2. The horizontal narrow-gap gas-shielded arc welding method according to claim 1, wherein
the chemical composition of the filler wire further includes, in mass%, at least one component selected from the group consisting of:
Cu: 0.60% or less,
Ni: 1.50% or less,
Cr: 0.80% or less,
Mo: 0.80% or less,
Nb: 0.04% or less,
V: 0.04% or less,
Ti: 0.30% or less,
Al: 0.10% or less,
Sn: 0.30% or less, and
Pb: 0.30% or less.

3. The horizontal narrow-gap gas-shielded arc welding method according to claim 1 or 2, further comprising performing welding with straight polarity by using the filler wire as a negative electrode.

4. The horizontal narrow-gap gas-shielded arc welding method according to any one of claims 1 to 3, wherein
the gas-shielded arc welding is performed by setting a welding current I in a range of 240 to 360 A, a welding voltage E in a range of 26 to 42 V, and a welding speed S in a range of 20 to 80 cm/min.
